# EUROPEAN PATENT SPECIFICATION

(11) **EP 2 380 467 B1**
(45) Date of publication and mention of the grant of the patent: **28.03.2018**
(21) Application number: 11171785.6
(22) Date of filing: 17.07.2007
(51) Int. Cl.: A47J 27/21, H01R 13/52

(54) **CORDLESS ELECTRICAL CONNECTOR**
SCHNURLOSER ELEKTRISCHER VERBINDER
CONNECTEUR ÉLECTRIQUE SANS FIL

(30) Priority: 26.07.2006 GB 0614864; 21.12.2006 GB 0625675; 22.05.2007 GB 0709836
(43) Date of publication of application: 26.10.2011
(62) Divisional of application: 07766271.6
(73) Proprietor: Otter Controls Limited, Buxton Derbyshire SK17 7LF (GB)
(72) Inventor: Whiteley, Simon, Buxton, Derbyshire SK17 7LF (GB)
(74) Representative: Cross, James Peter Archibald

(56) References cited:
- EP-A1- 1 502 525
- GB-A- 2 320 672
- GB-A- 2 346 540
- GB-A- 2 369 037
- US-A- 4 621 186
- US-A1- 2004 188 121

## Description

### Field of the Invention

The present invention relates to a cordless electrical connector, and particularly, although not exclusively, to a cordless electrical connector for use with domestic appliances.

### Background of the Invention

In a cordless kettle, a water reservoir includes a cordless connector that is operable to cooperate with a corresponding connector on a power base. Thus, when the water reservoir is mounted on the power base, power may be supplied to a heating element located in the kettle jug to allow water therein to be heated.

Such arrangements allow a power base to be connected to a domestic power supply (such as by a plug), whilst further allowing the kettle jug to be removed from the base after the water is heated to allow a user to more easily dispense the water as required.

Further advances on cordless connectors have led to 360° connectors, as described for example in WO 94/06185.

GB2369037A discloses a waterproof cordless electrical connector assembly for an appliance proper, the assembly comprising a waterproof cordless connector having a plurality of current carrying components for supplying power to the appliance proper, each of said current carrying components being sealed into the waterproof cordless connector.

The above types of cordless electrical connectors have also found use on other domestic appliances, such as food processors, blenders and the like. This arrangement provides an advantage that the processed/blended food can be more easily dispensed by a user.

However, as will be appreciated, appliances such as food processors, blenders and, to a lesser extent kettle jugs, need regular cleaning. In particular, cordless appliances for containing food or liquids other than water require cleaning after each use. Such a task is time consuming and may be difficult to perform manually.

Accordingly, it is desirable to provide a cordless connector that facilitates cleaning of an appliance. In particular, it would be desirable to provide a cordless appliance where the detachable part of the appliance can be washed in a dishwasher, by immersion in water or otherwise easily cleaned.

### Statements of the Invention

According to a first aspect of the present invention there is provided a waterproof cordless electrical connector assembly according to claim 1. According to a second aspect of the present invention there is provided a waterproof cordless electrical connector assembly according to claim 2.

As will be appreciated, the above described arrangements overcome problems associated with the prior art by allowing an appliance comprising a cordless electrical connection to be easily cleaned, for example by putting the appliance in a dish washer.

### Brief Description of the Drawings

In order that the present invention be more readily understood, specific embodiments thereof will now be described with reference to the accompanying drawings, a brief synopsis of which is set out below.
Figures 1a to 1e are different views of a first cordless electrical connector.
Figures 2a to 2e are different views of a second cordless electrical connector.
Figure 3 shows a further embodiment of the present invention.
Figure 4 shows the embodiment of figure 3, with the pieces thereof exploded out.
Figure 5 shows a variant embodiment of figure 3.
Figure 6 shows the embodiment of figure 5, with the pieces thereof exploded out.
Figure 7 shows the embodiment of figure 3 located within an appliance.
Figure 8a is an exploded view of a further embodiment of the present invention.
Figure 8b is a detail view of the embodiment of Figure 8a, when assembled.
Figure 9a is a perspective view of a further embodiment of the invention.
Figure 9b is a plan view of the embodiment of Figure 9a.
Figure 9c is a cross-sectional view in the plane A-A of Figure 9b.
Figure 10a is a perspective view of a further example.
Figure 10b is a plan view of the example of Figure 10a.
Figure 10c is a cross-sectional view in the plane A-A of Figure 10b.

### Detailed Description of Embodiments

The first embodiment is described in relation to a modified version of the applicant's CS4(CS7)/CP7 360° cordless electrical connector. Particulars of this connector can be found in WO 94/06185. Details of this product may also be found on the applicant's website (www.ottercontrols.com).

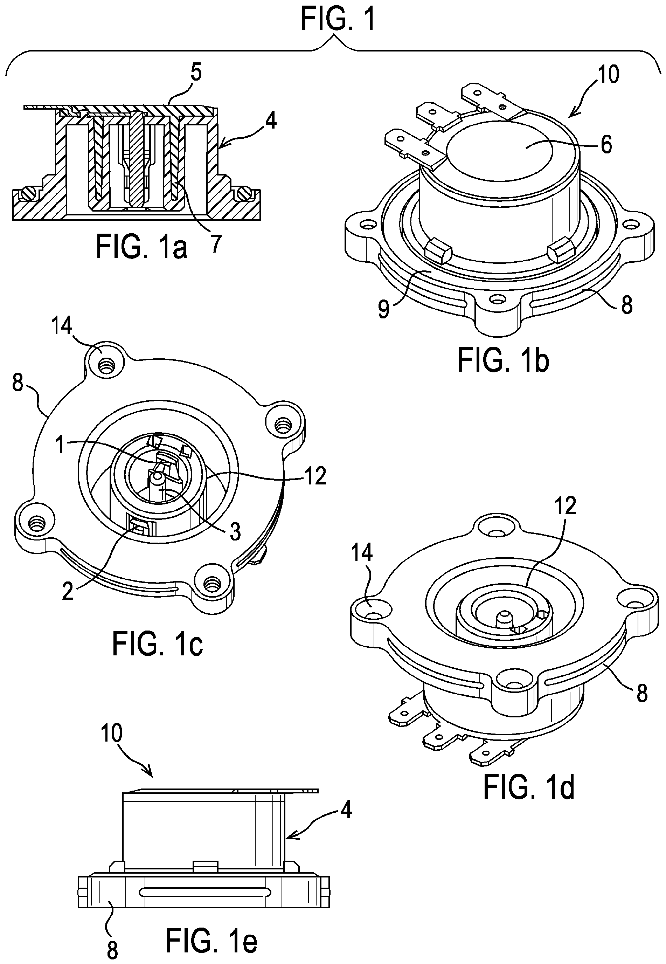

Figures 1a to 1e show an embodiment of the CP7 connector that, in use, is fitted to an electrical appliance, such as a kettle jug or food processor. The corresponding CS7 connector is fitted to a power base. Power may then be supplied to the electrical appliance by mounting the appliance onto the power base.

The main body 4 of the electrical connector 10 comprises an upper end 5, and a lower end defined by an aperture into which the corresponding CS7 electrical connector may fit. Figure 1c shows the electrical connectors: an earth pin 3 is formed in the centre of the aperture; an inner ring member 12 is formed in the aperture; a live connector 1 is formed on the inner surface of the inner member 12, and the neutral connector 2 is formed on the outer surface of the inner ring member 12.

It will be appreciated that the present invention is not limited to such arrangements, and that more or fewer connectors could be provided. For example, in some arrangements the controls for the appliance may be housed in the power base, with sensors or other components being housed in the appliance proper. In these arrangements it may be necessary to provide additional contacts in the connector system to allow control or other signals to be passed between the appliance proper and the power base control system. Particulars of such a control arrangement may be found in GB2228634.

In the first embodiment, the main body 4 of the electrical connector includes a flange 8 that is formed about the aperture at the lower end. The flange 8 comprises means 14 to allow the connector 10 to be securely fitted to an appliance, for example a series of holes through which screws may be placed. The flange 8 is operable to retain a gasket seal 9. In preferred embodiments the gasket seal takes the form of an o-ring. The gasket seal 9 is mounted on the side of the flange 8 remote from the aperture.

The top surface of the electrical connector 10 is enclosed by a cover 6. The cover is preferably an elastomer cover which seals the top surface, and also fills the cavities 7 that are present in a standard CP7 connector. The cover 6 is moulded onto the top of the component and embeds the current carrying parts at the upper end of the connector 10.

In an alternative embodiment the cover 6 may be insert moulded into the main body 4 of the connector 10. Thus, whilst the main body 4 is formed, and is still is a molten state, the current carrying components are embedded therein, and hence sealed. The cover 6 may be formed as an integral part of the main body 4.

An appliance to which the connector 10 is to be fitted is formed with a recess into which the connector 10 can be secured. The gasket seal 9 is thereby pressed between the appliance and the flange 8 to provide a watertight seal.

In a preferred arrangement the main body 4 may incorporate one or more drainage holes. Typically, when an appliance is washed in a dishwasher it is placed therein upside down. Accordingly, the connector 10 may fill with water during the washing process. The incorporation of drainage holes allows water that would otherwise be collected in the connector 10 to drain away.

The above described arrangement provides for the appliance, such as a food processor or kettle jug, to be placed into a dish washer for cleaning. The elastomer cover 5 and the gasket seal 9 provide for a water-proof integration of the connector with the appliance. The design of the present arrangement allows for large creepage distances, combined with good drainage of any residual water.

It will be appreciated that the above described electrical connector may be used in many different domestic appliances. Examples include food processors, blenders, kettles, coffee and espresso makers, juicers, smoothie makers, pans, sauce makers, steamers and milk frothers. It will be appreciated that the above list is not exhaustive.

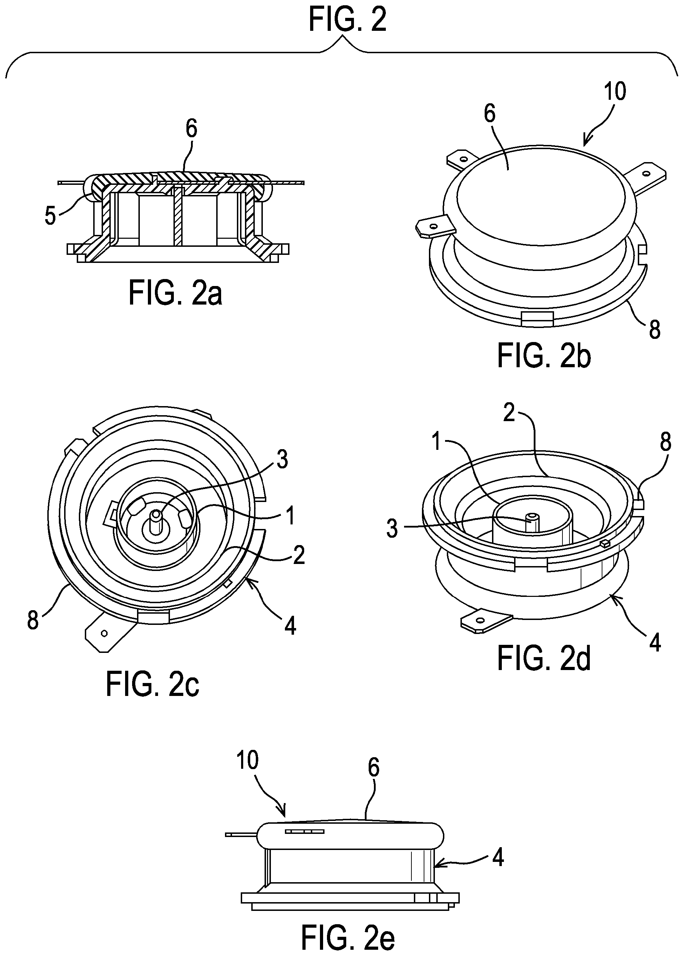

Figures 2a to 2e show a second embodiment of an electrical connector according to the present invention. This arrangement comprises a seal 6 provided at the upper end of the main body 4. This seal 6 is preferably an elastomer. A flange 8 is also preferably formed circumferentially about the lower end of the main body 4. The flange 8 is able to retain a gasket seal 9.

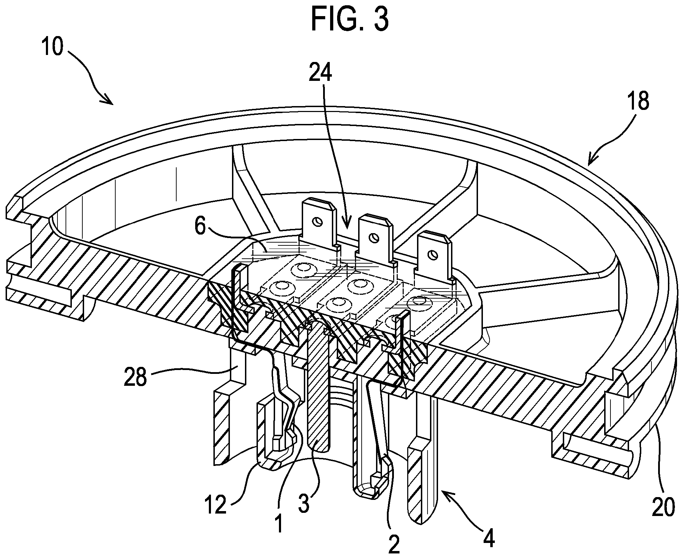

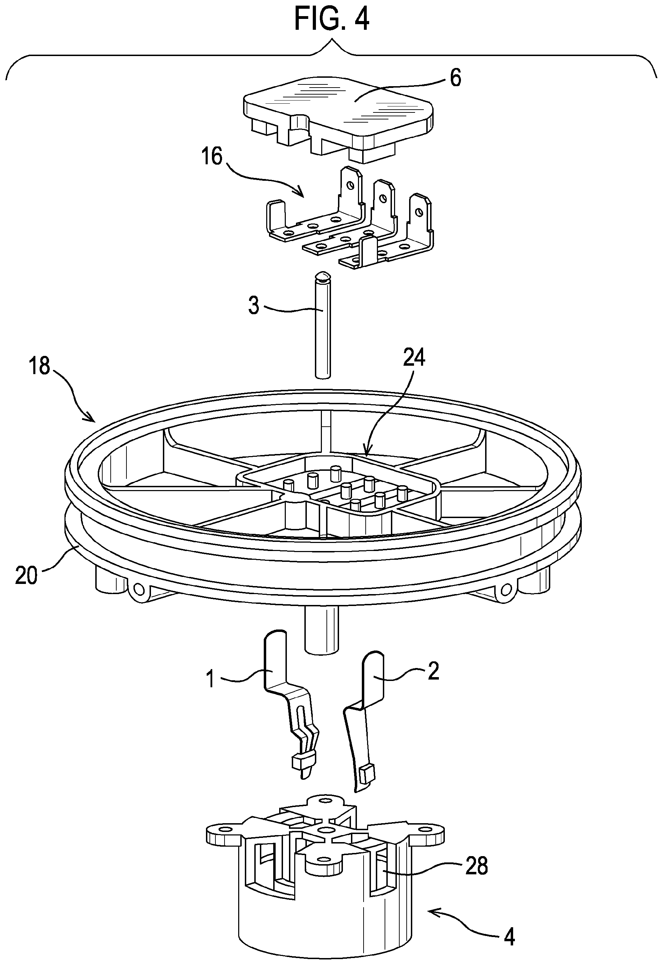

Figures 3 and 4 show a further modified version of a CP7 connector. The electrical connector 10 comprises a main body 4, with an upper end 5 and a lower end. The connector 10 further comprises an inner member 12. The lower end includes an aperture operable to cooperate with a power base connector, such as a CS7 power base connector. The upper end 5 includes a plurality of apertures through which the earth pin 3, and the live and neutral connectors 1, 2 protrude. The live and neutral connectors may be moving or static contacts.

The main body 4 of the connector 10 cooperatively fits with a member 18. Member 18 comprises an outer rim 20 operable to retain a seal and a central portion 24.

The central portion 24 houses the current carrying components 16 of the connector 10. Preferably the member 18 is moulded from plastic and the housing is formed in the moulding process: typically the housing may be a recessed area, or a section defined by a rim. However, it is also envisaged that it may be an area located on the member 18. The central portion 24 further comprises a plurality of apertures through which the earth pin 3 and the live and neutral connectors 2, 3 protrude. Accordingly, the current carrying components 16 are housed on the member 18 and the connector pins protrude through the member 18 and the main body 4, so as to be able to cooperate with corresponding connectors in the power base.

The central portion 24 of the member 18 is covered by a cover 6, which is preferably an elastomer cover.

In use, the member 18 is fitted to the bottom section of an appliance, and a seal, which is preferably a gasket seal, is pressed between the outer rim 20 of the member 18 and the appliance. The rim may releasably retain an o-ring, or a seal may be fixed thereto.

The main body 4 comprises one or more drainage apertures 28. Preferably these are located adjacent the upper end 5 of the connector 10, so that when the appliance is turned upside down, the drainage apertures 28 will be at the bottom of the main body 4, and hence aid drainage.

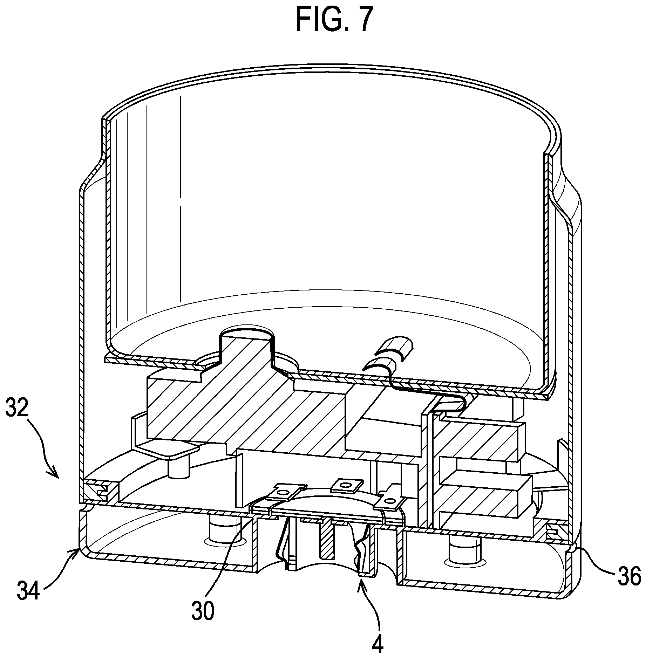

Referring to figure 7, the member 18 retains a seal, such as an o-ring, against an inner wall 30 of a bottom section 32 of an appliance. The combination of the elastomer cover 6, and the seal between member 18 and the appliance serves to water-proof the appliance, preferably so that the appliance is washable in a dishwasher.

The appliance further comprises a sub-base 34, such that the bottom surface of the main body 4 of the connector 10 is flush with the bottom of the appliance. The sub-base 34 comprises one or more drainage holes 36.

In use, water that collects in the connector 10 is able to drain through the drain apertures 28 in the main body 4, and out of the appliance through the apertures 36 in the sub-base 34.

In some embodiments of the invention, the member 18 and the main body 4 may be integrated into a single unit, preferably moulded from plastic. In such an arrangement, the integrated connector body may incorporate drainage apertures that feed into corresponding drainage channels. The drainage channels feed into apertures in the sub-base, so as to allow collected water to drain away from the connector 10.

As with the first embodiment, the current carrying components 16 may be insert moulded into the member 18, rather than being sealed by a cover 5. Both arrangements are equally preferred.

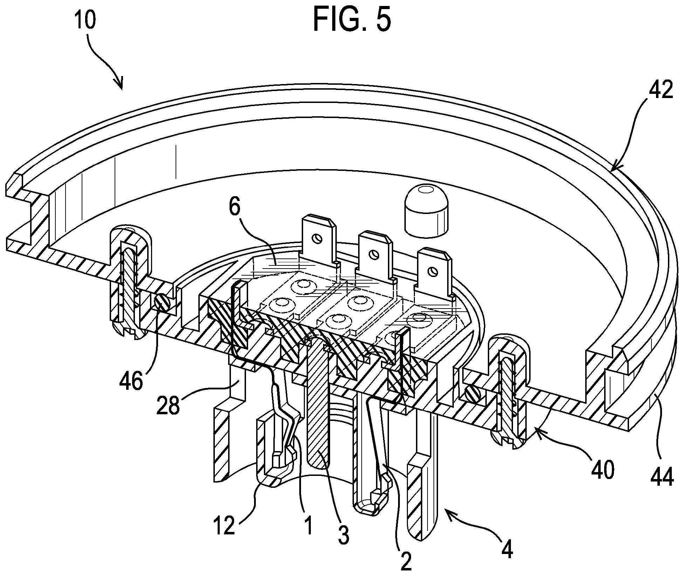

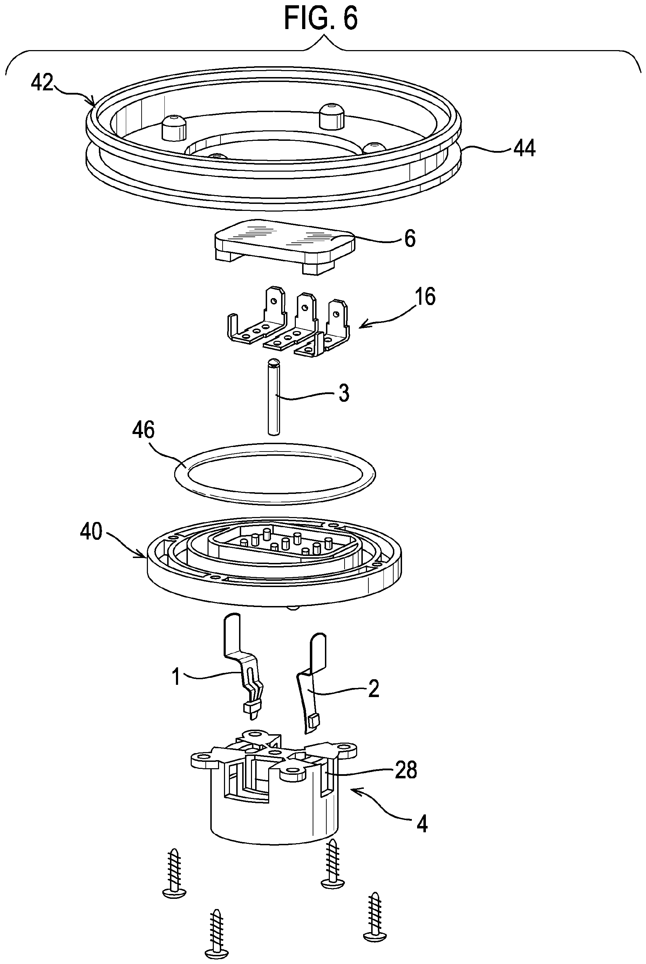

Figures 5 and 6 show an alternative embodiment of the present invention that is based upon the embodiment shown in figures 3 and 4. In this embodiment member 18 has been replaced with two members: inner member 40 and outer member 42. In the drawings, the two members 40, 42 are shown screwed together. However, it will be appreciated that any water-proof fixing method may be used.

The inner member 40 comprises a central portion 24 that houses the current carrying components 16 of the appliance in a similar way as described in relation to the second embodiment. The outer member 42 comprises an outer rim 44 that is operable to retain a seal and engage with an appliance to form a water-proof seal therebetween.

A further seal 46 is disposed between the inner member 40 and the outer member 42. This seal is preferably a gasket seal. It is also preferred that the seal is retained within a channel in the inner member. However, it will be appreciated that any retaining means would suffice.

In the embodiments of Figures 3 and 4, and of Figures 5 and 6, it can be seen that the central portion 24 is subdivided into sections for each of the current carrying portions, by an arrangement of low walls. These sections may alternatively be formed as discrete partitions, as will be described below.

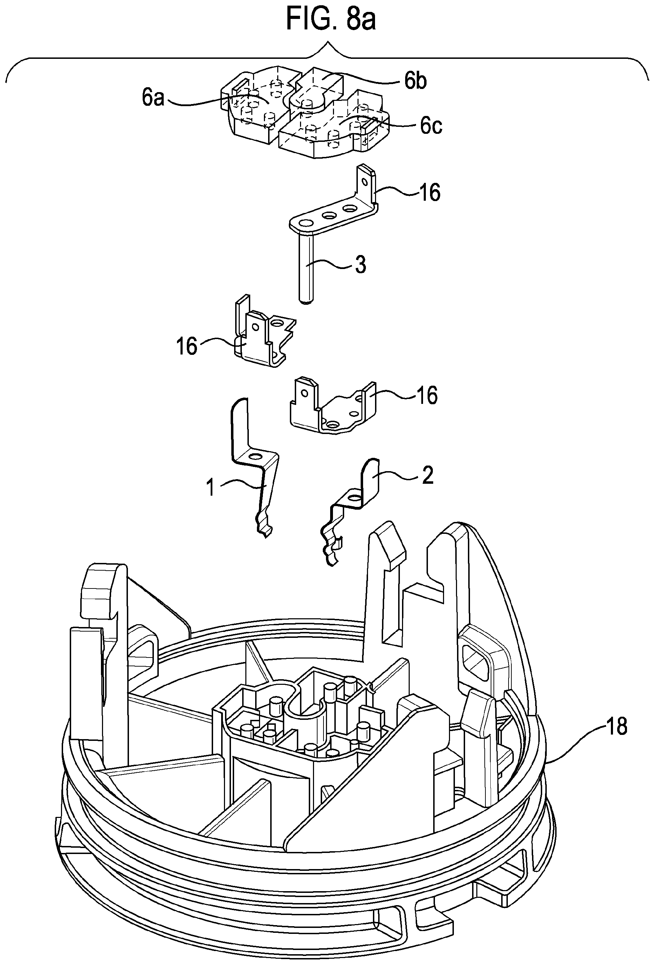

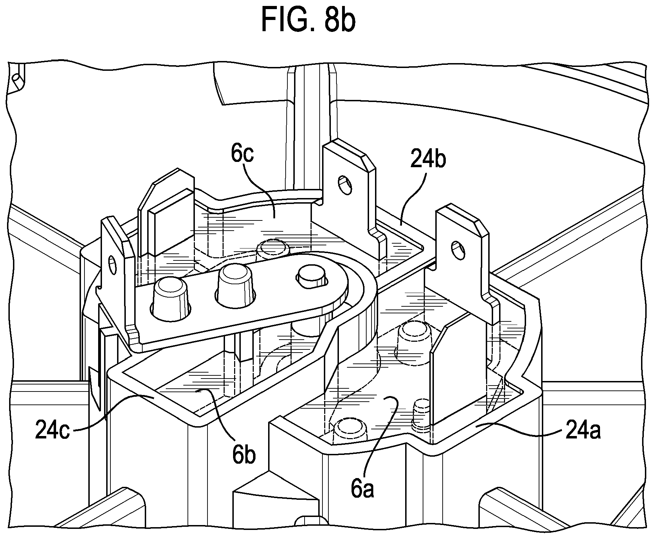

Figures 8a and 8b show a further embodiment of the invention that is similar to the embodiments of Figures 3 and 4 and that of Figures 5 and 6. However, in this embodiment each of the current carrying portions 16 in the top surface of the electrical connector 10 is enclosed in a discrete partition 24a, 24b, 24c within the central portion 24 of the member 18, and the seal 6 comprises corresponding discrete seals 6a, 6b, 6c which fit within the corresponding partitions 24a, 24b, 24c. Hence, the live, neutral and earth connectors are separately sealed, so that the risk of a short-circuit between connectors is reduced if one or more of the seals leaks, or breaks down.

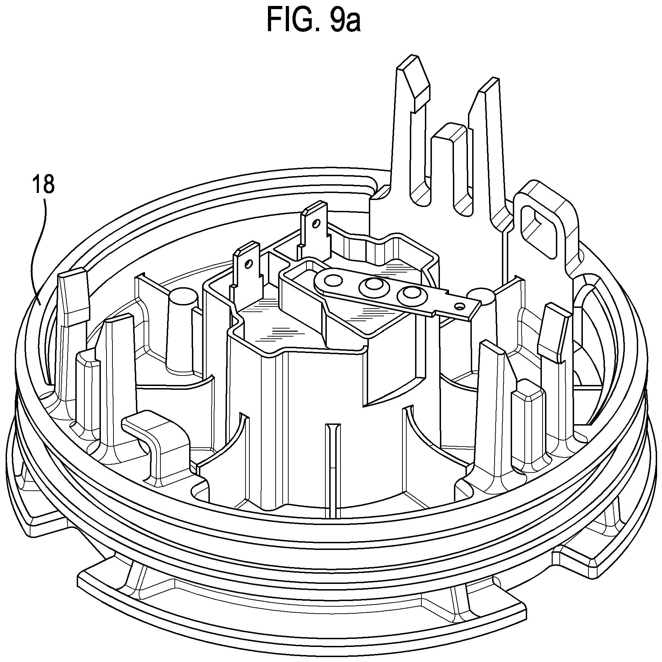

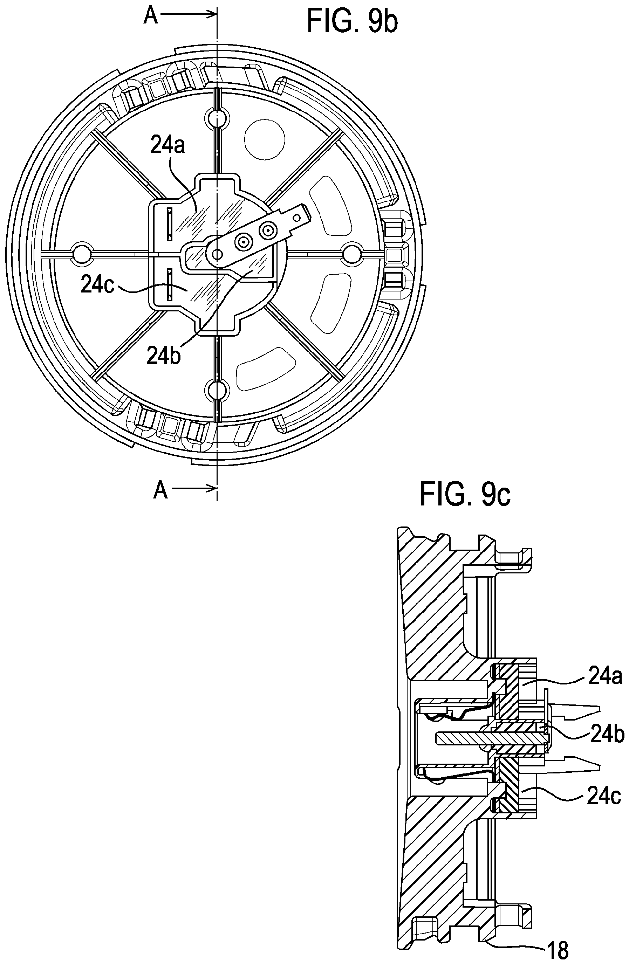

Figures 9a to 9c show a similar embodiment to that of Figures 8a and 8b; Figure 9c shows clearly in cross-section the separation of the central portion 24 into discrete partitions each containing a discrete seal 6a, 6b, 6c.

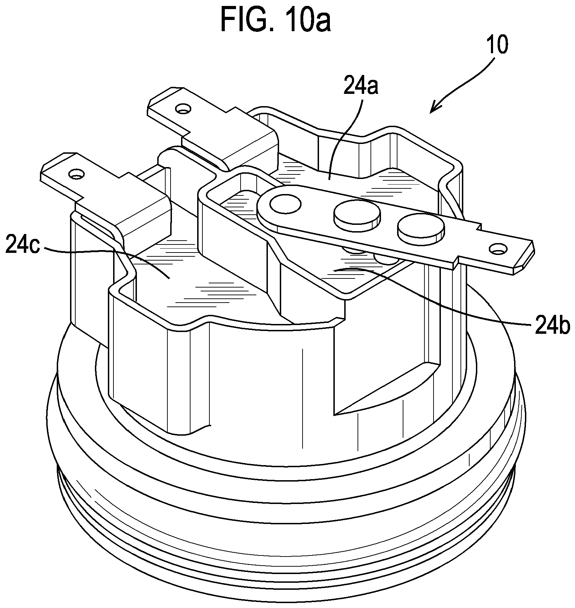

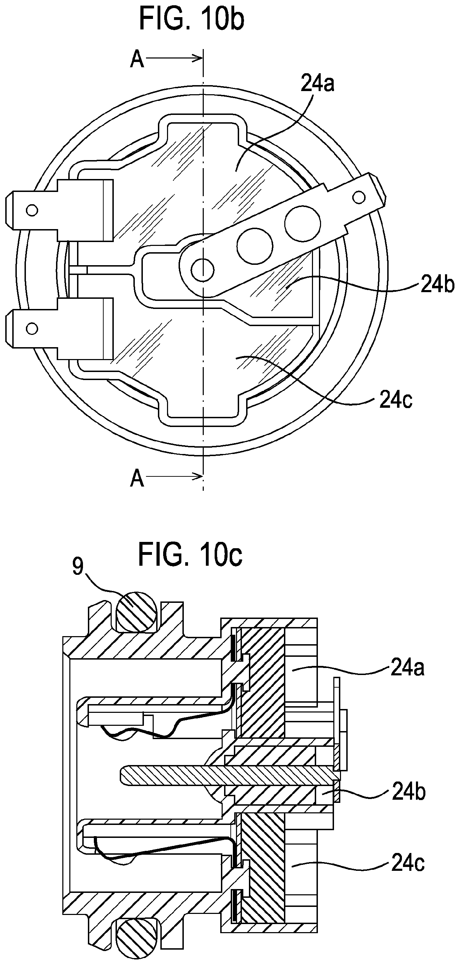

Figures 10a to 10c show an embodiment of a discrete connector similar to that of Figures 1 and 2, but with discrete partitions 24a, 24b, 24c and discrete seals 6a, 6b and 6c similar to those of the embodiments of Figures 8a and 8b and Figures 9a to 9c. Additionally, the gasket seal 9 is arranged to seal laterally against the appliance, rather than upwardly as in the embodiment of Figure 1.

In any of the embodiments of Figures 8 to 10, the discrete seals 6a, 6b and 6c may be formed before assemble, or alternatively by pouring a sealant in liquid form into the discrete partitions 24a to 24c and setting the sealant within the discrete partitions.

In all embodiments it is preferred that there is provided a plug operable to cooperate with a portion of the cordless electrical connector. The plug preferably fits within the aperture of the connector 10 to prevent water collecting therein during washing. In some embodiments the plug may be connected to the appliance. However, it is equally preferred that the plug is provided as a separate integer. As an alternative to the plug, there may be provided other means to close the aperture of the electrical connector, such as a sliding cover.

It is also preferred that a residual current protector is provided in either the appliance or the corresponding power base.

The electrical connection pins 1, 2 and 3 may be coated with an electrically conductive, relatively inert material, such as gold or silver plate, so as to reduced or overcome potential corrosion and/or galvanic reaction problems.

It will be appreciated that the above specific embodiments are described by way of reference only, and that many modifications and variations are possible within the scope of the enclosed claims.

## Claims

1. A waterproof cordless electrical connector assembly for an appliance proper, the assembly comprising a waterproof cordless connector (10) having a plurality of current carrying components (1, 2, 3) for supplying power to the appliance proper, each of said current carrying components (1, 2, 3) being sealed into the waterproof cordless connector (10); **characterized in that** the waterproof cordless connector (10) is integrally formed with a base component (18) comprising a skirt surrounding the connector (10), the base component (18) including retaining means (20) for retaining a seal for sealing against the appliance proper.

2. A waterproof cordless electrical connector assembly for an appliance proper, the assembly comprising a waterproof cordless connector (10) having a plurality of current carrying components (1, 2, 3) for supplying power to the appliance proper, each of said current carrying components (1, 2, 3) being sealed into the waterproof cordless connector (10); **characterized in that** the waterproof cordless connector assembly comprises a discrete waterproof cordless connector sealed within a base component (42) comprising a skirt surrounding the connector, the base component including retaining means (44) for retaining a seal for sealing against the appliance proper.

3. The connector assembly of claim 2, wherein the discrete waterproof cordless connector includes a seal (46) for sealing between the discrete waterproof cordless connector and the base component.

4. The connector assembly of any preceding claim, wherein said retaining means comprises a rim (20; 44).

5. The connector assembly of any preceding claim, wherein said retaining means is arranged to retain the seal (9; 46) around the base component (18; 40; 42).

6. The connector assembly of any preceding claim, including fitting means (14) for fitting the base component (8; 40) to the appliance proper.

7. The connector assembly of any preceding claim, wherein the seal (9; 46) is arranged to seal upwardly against the appliance proper.

8. The connector assembly of any one of claims 1 to 6, wherein the seal is arranged to seal laterally against the appliance proper.

9. The connector assembly of claim 8, wherein the seal is arranged to seal against an inner wall (30) of a bottom section (32) of the appliance proper.

10. The connector assembly of any preceding claim, wherein the waterproof cordless electrical connector includes means to allow water that would otherwise be retained within said cordless connector to drain away.

11. The connector assembly of any preceding claim, wherein the waterproof cordless connector is a 360° waterproof cordless connector.

12. The connector assembly of any preceding claim, wherein the current carrying components (1, 2, 3) are at least partially embedded in a sealant (6), which may be an elastomer material moulded onto the top of the electrical connector (10).

13. The connector assembly of any preceding claim, wherein the current carrying components (1, 2, 3) are sealed into the electrical connector (10) by insert moulding.

14. The connector assembly of any preceding claim, including a cover (6) to seal the current carrying components (1, 2, 3) of the electrical connector (10), wherein the cover (6) may be an elastomer material moulded onto the top of the electrical connector (10).

15. An appliance proper having the connector assembly of any preceding claim.

## Patentansprüche

1. Wasserdichte schnurlose elektrische Verbinderbaugruppe für ein Gerät, wobei die Baugruppe einen wasserdichten schnurlosen Verbinder (10) umfasst, der eine Vielzahl von stromführenden Komponenten (1, 2, 3) aufweist, um das Gerät mit Strom zu versorgen, wobei jede der stromführenden Komponenten (1, 2, 3) in dem wasserdichten schnurlosen Verbinder (10) abgedichtet ist;
**dadurch gekennzeichnet, dass**
der wasserdichte schnurlose Verbinder (10) einstückig mit einer Basiskomponente (18) gebildet ist, die eine Schürze umfasst, die den Verbinder (10) umgibt,
wobei die Basiskomponente (18) Haltemittel (20) zum Halten einer Dichtung zum Abdichten gegen das Gerät beinhaltet.

2. Wasserdichte schnurlose elektrische Verbinderbaugruppe für ein Gerät, wobei die Baugruppe einen wasserdichten schnurlosen Verbinder (10) umfasst, der eine Vielzahl von stromführenden Komponenten (1, 2, 3) aufweist, um das Gerät mit Strom zu versorgen, wobei jede der stromführenden Komponenten (1, 2, 3) in dem wasserdichten schnurlosen Verbinder (10) abgedichtet ist;
**dadurch gekennzeichnet, dass**
die wasserdichte schnurlose Verbinderbaugruppe einen eigenständigen wasserdichten schnurlosen Verbinder umfasst, der in einer Basiskomponente (42) abgedichtet ist, die eine Schürze umfasst, die den Verbinder umgibt, wobei die Basiskomponente Haltemittel (44) zum Halten einer Dichtung zum Abdichten gegen das Gerät beinhaltet.

3. Verbinderbaugruppe nach Anspruch 2, wobei der eigenständige wasserdichte schnurlose Verbinder eine Dichtung (46) zum Abdichten zwischen dem eigenständigen wasserdichten schnurlosen Verbinder und der Basiskomponente beinhaltet.

4. Verbinderbaugruppe nach einem der vorhergehenden Ansprüche, wobei die Haltemittel einen Rand (20; 44) umfassen.

5. Verbinderbaugruppe nach einem der vorhergehenden Ansprüche, wobei die Haltemittel angeordnet sind, um die Dichtung (9; 46) um die Basiskomponente (18; 40; 42) zu halten.

6. Verbinderbaugruppe nach einem der vorhergehenden Ansprüche, die Montagemittel (14) zum Montieren der Basiskomponente (8; 40) an das Gerät beinhaltet.

7. Verbinderbaugruppe nach einem der vorhergehenden Ansprüche, wobei die Dichtung (9; 46) angeordnet ist, um nach oben gegen das Gerät abzudichten.

8. Verbinderbaugruppe nach einem der Ansprüche 1 bis 6, wobei die Dichtung angeordnet ist, um seitlich gegen das Gerät abzudichten.

9. Verbinderbaugruppe nach Anspruch 8, wobei die Dichtung angeordnet ist, um gegen eine innere Wand (30) eines Bodenabschnitts (32) des Gerätes abzudichten.

10. Verbinderbaugruppe nach einem der vorhergehenden Ansprüche, wobei der wasserdichte schnurlose elektrische Verbinder Mittel beinhaltet, um das Abfließen von Wasser zu erlauben, das ansonsten in dem schnurlosen Verbinder zurückgehalten werden würde.

11. Verbinderbaugruppe nach einem der vorhergehenden Ansprüche, wobei der wasserdichte schnurlose Verbinder ein wasserdichter schnurloser 360°-Verbinder ist.

12. Verbinderbaugruppe nach einem der vorhergehenden Ansprüche, wobei die stromführenden Komponenten (1, 2, 3) mindestens zum Teil in einem Dichtungsmittel (6) eingebettet sind, das ein Elastomermaterial sein kann, das auf der Oberseite des elektrischen Verbinders (10) geformt ist.

13. Verbinderbaugruppe nach einem der vorhergehenden Ansprüche, wobei die stromführenden Komponenten (1, 2, 3) in den elektrischen Verbinder (10) mittels Spritzgussverfahren abgedichtet werden.

14. Verbinderbaugruppe nach einem der vorhergehenden Ansprüche, die eine Abdeckung (6) beinhaltet, um die stromführenden Komponenten (1, 2, 3) des elektrischen Verbinders (10) abzudichten, wobei die Abdeckung (6) ein Elastomermaterial sein kann, das auf der Oberseite des elektrischen Verbinders (10) geformt ist.

15. Gerät, das eine Verbinderbaugruppe nach einem der vorhergehenden Ansprüche aufweist.

## Revendications

1. Ensemble de connecteur électrique sans fil étanche pour un appareil électrique approprié, l'ensemble comprenant un connecteur sans fil étanche (10) muni d'une pluralité de composants porteurs de courant (1, 2, 3) pour l'alimentation en courant de l'appareil approprié, chacun desdits composants porteurs de courant (1, 2, 3) étant contenu hermétiquement dans le connecteur sans fil étanche (10) ;
**caractérisé en ce que**
le connecteur sans fil étanche (10) est réalisé de façon intégrale avec un composant de base (18) comprenant une bordure entourant le connecteur (10),
le composant de base (18) comprenant un dispositif de retenue (20) pour maintenir une garniture d'étanchéité contre l'appareil électrique approprié.

2. Ensemble de connecteur électrique sans fil étanche pour un appareil électrique, l'ensemble comprenant un connecteur sans fil étanche (10) muni d'une pluralité de composants porteurs de courant (1, 2, 3) pour l'alimentation en courant de l'appareil approprié, chacun desdits composants porteurs de courant (1, 2, 3) étant contenu hermétiquement dans le connecteur sans fil étanche (10) ;
**caractérisé en ce que**
l'ensemble de connecteur sans fil étanche comprend un connecteur sans fil étanche discret contenu hermétiquement dans un composant de base (42) comprenant une bordure entourant le connecteur, le composant de base comprenant un dispositif de retenue (44) pour maintenir une garniture d'étanchéité contre l'appareil électrique approprié.

3. Ensemble de connecteur selon la revendication 2, le connecteur sans fil étanche discret comprenant une garniture (46) assurant l'étanchéité entre le connecteur sans fil étanche discret et le composant de base.

4. Ensemble de connecteur selon une quelconque des revendications précédentes, ledit dispositif de retenue comprenant un rebord (20; 44).

5. Ensemble de connecteur selon une quelconque des revendications précédentes, ledit dispositif de retenue étant agencé pour maintenir la garniture d'étanchéité (9; 46) autour du composant de base (18; 40; 42).

6. Ensemble de connecteur selon une quelconque des revendications précédentes, comprenant un dispositif de montage (14) permettant d'effectuer le montage du composant de base (8; 40) sur l'appareil approprié.

7. Ensemble de connecteur selon une quelconque des revendications précédentes, la garniture d'étanchéité (9; 46) étant agencée pour assurer l'étanchéité vers le haut contre l'appareil approprié.

8. Ensemble de connecteur selon une quelconque des revendications 1 à 6, la garniture d'étanchéité étant agencée pour assurer l'étanchéité latéralement contre l'appareil approprié.

9. Ensemble de connecteur selon la revendication 8, la garniture d'étanchéité étant agencée pour assurer l'étanchéité contre une paroi interne (30) d'une section inférieure (32) de l'appareil approprié.

10. Ensemble de connecteur selon une quelconque des revendications précédentes, le connecteur électrique sans fil étanche comprenant un dispositif permettant le refoulement hors de l'appareil de l'eau qui autrement serait maintenue à l'intérieur dudit connecteur sans fil.

11. Ensemble de connecteur selon une quelconque des revendications précédentes, le connecteur sans fil étanche étant un connecteur sans fil étanche sur 360°.

12. Ensemble de connecteur selon une quelconque des revendications précédentes, les composants porteurs de courant (1, 2, 3) étant au moins partiellement encastrés dans un enduit d'étanchéité (6) qui pourra être un matériau élastomère moulé sur le dessus du connecteur électrique (10).

13. Ensemble de connecteur selon une quelconque des revendications précédentes, les composants porteurs de courant (1, 2, 3) étant contenus hermétiquement dans le connecteur électrique (10) par un moulage par insertion.

14. Ensemble de connecteur selon une quelconque des revendications précédentes, comprenant un couvercle (6) pouvant contenir hermétiquement les composants porteurs de courant (1, 2, 3) du connecteur électrique (10), le couvercle (6) pouvant être un matériau élastomère moulé sur le dessus du connecteur électrique (10).

15. Un appareil approprié muni de l'ensemble de connecteur selon une quelconque des revendications précédentes.
